# EUROPÄISCHE PATENTSCHRIFT

(11) **EP 2 497 962 B1**
(45) Veröffentlichungstag und Bekanntmachung des Hinweises auf die Patenterteilung: **24.12.2014**
(21) Anmeldenummer: 12158461.9
(22) Anmeldetag: 07.03.2012
(51) Int. Cl.: F16B 25/10, F16B 33/02, F16B 25/00, F16B 37/12

(54) **Gewindehülse**
Thread cylinder
Douille filetée

(30) Priorität: 09.03.2011 DE 102011001176
(43) Veröffentlichungstag der Anmeldung: 12.09.2012
(73) Patentinhaber: RAMPA Verbindungstechnik GmbH & Co. KG, 21493 Schwarzenbek (DE)
(72) Erfinder: Färber, Wolfgang, 21493 Schwarzenbek (DE)
(74) Vertreter: RGTH

(56) Entgegenhaltungen:
- EP-A1- 1 574 725

## Beschreibung

Die Erfindung betrifft eine Gewindehülse aus Metall zum Eindrehen in eine Aufnahmeöffnung eines Werkstücks.

Derartige Gewindehülsen werden auch als Muffen oder Gewindebuchsen bezeichnet. Sie bestehen aus einem Kern und einem auf der Außenoberfläche des Kerns angebrachten Gewinde. Die Aufnahmeöffnung des Werkstücks, in die die Gewindehülse eingedreht werden soll, kann beispielsweise als Bohrung ausgebildet sein. Dabei weist die Aufnahmeöffnung normalerweise kein eigenes Gewinde auf.

Gewindehülsen weisen normalerweise einen Hohlraum auf, in dem ein Innengewinde zur Aufnahme eines komplementären Verbindungselementes, beispielsweise einer Schraube, vorgesehen ist. So handelt es sich bei der Gewindehülse selber um keine Schraube. Der Hohlraum kann sich entlang der gesamten Länge der Gewindehülse erstrecken oder aber nur von einem stirnseitigen Ende der Gewindehülse in diese hineinragen. In der Innenwand der Gewindehülse kann ein Innengewinde ausgebildet sein, das sich entlang des gesamten Hohlraums oder nur eines Teiles erstrecken kann.

Bei aus dem Stand der Technik bekannten Gewindehülsen treten beim Eindrehen in Aufnahmeöffnungen von Werkstücken, insbesondere bei Werkstücken aus Holz, immer wieder Probleme auf. So kann es zur Bildung von Rissen im Werkstoffmaterial kommen. Dies wird meistens dadurch verursacht, dass aufgrund der Ausgestaltung des Gewindeganges der Gewindehülse das Werkstückmaterial verformt wird. Diese Verformung führt zu so großen Spannungen, dass das Werkstückmaterial reißt oder auch aus der Aufnahmeöffnung quillt und eine flächenbündige Montage verhindert. Außerdem kann sich das Material während des Eindrehvorgangs erhitzen und bei zu hoher Belastung ausbrechen.

Aus der EP 1 574 725 A1 ist eine Profilverbindung zur Verbindung von zwei Profilstäben aus Metall bekannt. In eine Profilnut eines dieser Profilstäbe ist eine Gewindehülse mit einer parallel zur Profilnut verlaufenden Durchtrittsbohrung eingeschraubt, wobei eine Verbindungsschraube mit ihrem Schraubenschaft die Gewindehülse durchtritt und durch die Gewindehülse in Verbindungsrichtung der Profilstäbe gehalten wird. Die Gewindehülse umfasst an ihrer Außenseite einen Gewindedrückabschnitt, der zum Spanabhub vermeidenden Formen eines Gewindes in der Profilnut des Profilstabes ausgebildet ist.

Es ist Aufgabe der vorliegenden Erfindung, eine Gewindehülse anzugeben, bei der nach dem Eindrehen eine ausreichende Zugfestigkeit der Verbindung zwischen Gewindehülse und Werkstoff gewährleistet ist, jedoch während des Eindrehens keine Beschädigungen am Werkstück auftreten bzw. diese verringert werden. Die oben genannte Aufgabe wird durch eine Gewindehülse mit den Merkmalen des Anspruchs 1 gelöst.

Die Gewindehülse ist normalerweise ganzheitlich aus Metall gebildet. Durch das Eindrehen, d.h. eine Drehung um die Längsachse der Gewindehülse, wird die Gewindehülse in die Aufnahmeöffnung eines Werkstücks eingebracht. Das Gewinde der Gewindehülse formt beim Eindrehen in eine Aufnahmeöffnung ein Gewinde bzw. Gegengewinde in die (glattwandige) Oberfläche der Aufnahmeöffnung. Abhängig vom Gewindeprofil der Gewindehülse kann das Formen des Gewindes bzw. Gegengewindes in die Wand der Aufnahmeöffnung grundsätzlich durch Verdrängen oder Schneiden des Werkstoffmaterials erreicht werden.

Bei der vorliegenden Erfindung erfolgt das Formen des Gewindes in die glattwandige Oberfläche der Aufnahmeöffnung durch ein besonders effektives Schneiden. So weist das Gewindeprofil der Gewindehülse einen sehr kleinen Flankenwinkel auf, der im Bereich zwischen 25° und 35° liegt. Das Gewindeprofil ist der im Querschnitt gebildete Umriss des Gewindes bzw. Gewindeganges. Unter dem Flankenwinkel versteht man denjenigen Winkel, der von den das Gewindeprofil formenden Flanken eingeschlossen wird. Durch die Wahl eines kleinen Flankenwinkels wird eine bessere Schneidwirkung zum Einschneiden in die Wand einer Aufnahmeöffnung erreicht, woraus ein niedrigeres benötigtes Drehmoment beim Eindrehen der Gewindehülse resultiert. Das Gewinde der Gewindehülse verdrängt, verpresst oder verdichtet das Material des Werkstücks nicht, sondern schneidet es, wobei eine ausreichende Stabilität des Flankenwinkels gewährleistet sein muss, damit die Belastbarkeit auf Zug weiterhin erhalten bleibt. Folglich kommt es seltener zum Bruch des Werkstücks und die thermische Aufheizung des Materials, wie sie insbesondere in Holz vorkommt, wird wesentlich reduziert. Zusätzlich wird durch den besseren Schneidevorgang das Material des Werkstücks, in das die Gewindehülse eingedreht wird, weniger geschädigt, bspw. durch die Bildung von kleinen Rissen, die anschließend in einer schlechten Verbindung zwischen Gewindehülse und Werkstoff resultieren. Insgesamt entsteht demnach eine erheblich erhöhte Zugfestigkeit der Verbindung.

Außerdem weist die erfindungsgemäße Gewindehülse eine relativ große Teilung auf. Unter Teilung versteht man den längsachsenparallelen Abstand zwischen der Mitte zweier benachbarter Gewindegangabschnitte. Bei eingängigen Gewinden entspricht die Teilung der Steigung, die die Strecke beschreibt, um die sich eine Gewindehülse bei einmaliger Drehung derselben um 360° in ein Material dreht.

Eine große Teilung ist insbesondere beim Eindrehen in Holz von Vorteil, da dadurch weniger Holzfasern beschädigt werden und eine festere Verbindung gegeben ist. Dennoch darf die Teilung nicht allzu groß gewählt werden, da sonst die Zugfestigkeit wieder abnimmt. Die erfindungsgemäße Gewindehülse löst diesen Widerspruch durch die Ausbildung einer Teilung, die das 0,1-fache bis 0,4-fache des Außendurchmessers der Gewindehülse beträgt.

Auch die Gewindetiefe betreffend findet die erfindungsgemäße Gewindehülse einen Kompromiss zwischen einem Erhöhen der Zugfestigkeit der Verbindung zwischen Gewindehülse und Werkstück durch eine besonders große Gewindetiefe und dem Schaden, der dem Werkstoff dadurch gleichzeitig zugefügt wird. Als Gewindetiefe wird hierbei die Differenz zwischen Außendurchmesser der Gewindehülse, der das Gewinde mit einschließt, und dem Außendurchmesser des Kerns (ohne Außengewinde) verstanden. Mit anderen Worten ist die Gewindetiefe die Höhe des Gewindeprofils. Gemäß der vorliegenden Erfindung beträgt die Gewindetiefe das 0,02-fache bis 0,2-fache des Außendurchmessers der Gewindehülse.

In einer bevorzugten Ausführungsform der erfindungsgemäßen Gewindehülse weist das Gewindeprofil der Gewindehülse keine Krümmung auf, insbesondere im Bereich des Gewindeprofils, der vom Kern am meisten beabstandet ist. Somit ist das Profil des Gewindes nicht als Rundgewinde ausgebildet und weist generell in keinem Bereich einen Krümmungsradius auf. Dadurch wird eine besonders gute Schneidwirkung der Gewindehülse erreicht.

Weiterhin ist das Gewindeprofil in einer bevorzugten Ausführung im Wesentlichen spitz ausgebildet ist. Dies bedeutet, dass die Flanken des Gewindes in dem vom Kern am meisten beabstandeten Punkt des Gewindeprofils im Wesentlichen eine Spitze formen. Herstellungsbedingt kann nicht immer ein perfekt spitz ausgebildetes Gewindeprofil gewährleistet sein. Zwischen den Enden der Gewindeflanken, die vom Kern der Gewindehülse abgewandt sind, kann ein Plateau entstehen, das im Wesentlichen parallel zum Kern der Gewindehülse verläuft. Dieses Plateau sollte jedoch höchstens nur 10 %, bevorzugt höchstens 5 %, des Abstandes betragen, den die Flanken zwischen ihren dem Kern zugewandten Enden, einschließen, damit ein im Wesentlichen spitz ausgebildetes Profil gegeben ist.

Ferner ist es bevorzugt, dass der Flankenwinkel entlang der gesamten Gewindetiefe konstant ist. Dies ist der Fall, wenn die Flanken des Gewindes im Gewindeprofil weder Knicke noch Rundungen aufweisen, sondern durch jeweils eine Gerade mit konstanter Geradensteigung beschrieben werden können.

Grundsätzlich kann die Gewindehülse zum Eindrehen in die Aufnahmeöffnung eines Werkstücks jeglicher Art verwendet werden. In einer bevorzugten Ausführungsform ist die erfindungsgemäße Gewindehülse jedoch zum Eindrehen in ein Werkstück aus Holz ausgebildet, sodass die Gewindehülse und das Holzwerkstück ein gemeinsames System darstellen. Besonders vorteilhaft ist, dass die erfindungsgemäße Gewindehülse das Holz bzw. die Zellstruktur des Holzes nicht verdichtet oder verpresst, sondern stattdessen nur zerschneidet. Daraus resultiert eine erheblich erhöhte Zugfestigkeit zwischen Gewindehülse und dem Werkstück aus Holz. Dieser Effekt wird weiter verstärkt durch die Holzstruktur. Holz besitzt in Längsrichtung der Jahresringe grundsätzlich eine höhere Zugfestigkeit als in Querrichtung, da die verschiedenen Jahresringe unterschiedliche Materialeigenschaften besitzen und zwischen einzelnen Jahresringen oft geringer belastbare Verbindungen bestehen. Wird durch das Einbringen einer Gewindehülse das Holz bzw. dessen Zellstruktur verpresst und somit zerstört, verringert sich der Zusammenhalt zwischen den einzelnen Jahresringen weiter und die Zugfestigkeit zwischen der Gewindehülse und dem Holzwerkstück nimmt ab.

Bevorzugt beträgt der Flankenwinkel 28° bis 32°, besonders bevorzugt 29° bis 31° und nochmals bevorzugt genau 30°.

Die Teilung des Gewindes beträgt bevorzugt das 0,15-fache bis 0,35-fache und besonders bevorzugt das 0,16-fache bis 0,33-fache des Außendurchmessers der Gewindehülse.

Ferner bevorzugt beträgt die Gewindetiefe des Gewindes das 0,04-fache bis 0,18-fache und besonders bevorzugt das 0,06-fache bis 0,16-fache des Außendurchmessers der Gewindehülse.

Es hat sich gezeigt, dass vor allem bei den oben angegebenen besonders bevorzugten Wertebereichen eine außerordentlich gute Zugfestigkeit der Verbindung zwischen Gewindehülse und Werkstück erreicht werden kann.

In einer weiteren bevorzugten Ausführungsform weist der Kern der Gewindehülse im Wesentlichen einen durchgängig konstanten Durchmesser auf. Hierbei kann sowohl der Außendurchmesser als auch der Innendurchmesser des Kerns, der zugleich Durchmesser des Hohlraums des Kerns (Schraubenaufnahmeöffnung) ist, durchgängig konstant ausgebildet sein.

Besonders bevorzugt ist die erfindungsgemäße Gewindehülse aus Stahl, Messing oder Zinkdruckguss ausgebildet.

Eine bevorzugte Ausführungsform der Erfindung ist in den Figuren dargestellt, die schematisch zeigen:
- Fig. 1:: Eine Seitenansicht und einen Längsschnitt einer erfindungsgemäßen Gewindehülse; und
- Fig. 2:: eine Draufsicht auf eine Gewindehülse aus Fig. 1

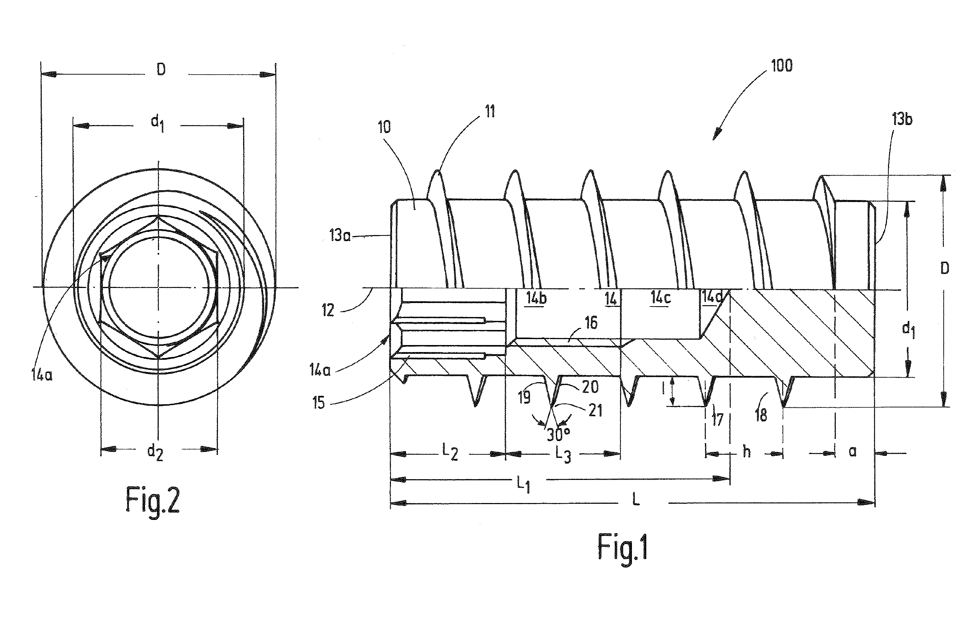

Fig. 1 zeigt eine erfindungsgemäße Gewindehülse 100 der Länge L, die einen zylindrischen Kern 10 und ein außen auf dem Kern 10 angebrachtes, eingängiges Gewinde 11 umfasst. Die untere Hälfte der Fig. 1 zeigt einen Schnitt entlang der Längsachse 12 der Gewindehülse 100, während auf der oberen Hälfte eine Seitenansicht der Gewindehülse 100 zu sehen ist.

In der oberen Figurenhälfte ist zu erkennen, wie sich der Gewindegang des eingängigen Gewindes 11 wendelförmig von dem einen Ende 13a bis zum anderen Ende 13b der Gewindehülse 100 um den Kern 10 wickelt, wobei der Bereich entlang der Strecke a am Ende 13b der Gewindehülse 100 ausgespart ist. Dieser gewindefreie Bereich entlang der Strecke a dient zum Einsetzen der Gewindehülse 100 in eine Aufnahmeöffnung (hier nicht dargestellt), in die die Gewindehülse 100 eingedreht wird. Außerdem ist zu erkennen, dass sich die Gewindehülse 100 an ihren beiden Enden 13a, 13b konisch verjüngt.

In der unteren Figurenhälfte ist zu sehen, dass die abgebildete Gewindehülse 100 einen zylindrischen Hohlraum 14 aufweist, der vom Ende 13a der Gewindehülse 100 um die Strecke L1 in die Gewindehülse 100 hineinragt. Der Hohlraum 14 weist vier Unterbereiche 14a, 14b, 14c, 14d auf, die sich direkt aneinander in Längsrichtung der Gewindehülse 100 anschließen. Die Strecke L1 beträgt in diesem Ausführungsbeispiel mindestens die Hälfte der Länge L der Gewindehülse 100. Entlang der Strecke L2 ist der Hohlraum 14 als Aufnahmebereich 14a für ein Werkzeug zum Eindrehen der Gewindehülse 100 ausgebildet. In dem Aufnahmebereich 14a sind in der Innenwand des Kerns 10 längsachsenparallel ausgerichtete Einkerbungen 15 ausgebildet, in die das Werkzeug greifen kann. In diesem Ausführungsbeispiel dient der Aufnahmebereich 14a zur Aufnahme eines speziellen Innensechskantschlüssels (hier nicht dargestellt).

Entlang der Strecken L2 und L3 weist die Gewindehülse 100 aus Fig. 1 ein Innengewinde 16 zum Eindrehen eines weiteren Verbindungselementes (hier nicht dargestellt), beispielsweise einer Schraube, auf. In dem Bereich L2 wurde durch die Herstellung des Aufnahmebereichs 14a mit den Einkerbungen 15 das Innengewinde 16 teilweise reduziert. In dem Bereich 14b entlang der Strecke L3 liegt das Innengewinde 16 ungeschmälert vor. Das ungeschmälerte Innengewinde 16 ist in der Fig. 1 nicht wie das außen angebrachte Gewinde 11 durch ein Profil kenntlich gemacht, sondern durch die Abgrenzung eines Parallelogramms mit L3 als lange Seite und der Gewindetiefe des Innengewindes 16 als kurze Seite. In dem Bereich 14c des Hohlraums 14 der Gewindehülse 100 liegt kein Innengewinde 16 vor, so dass der Hohlraum in diesem Bereich 14c einen anderen, nämlich kleineren, Durchmesser als in dem Bereich 14b aufweist. In dem Bereich 14d verjüngt sich der Hohlraum innerhalb der Gewindehülse 100 konisch zu einer Spitze.
In dem Längsschnitt in Fig. 1 ist das Gewindeprofil mit seinen charakteristischen Kenngrößen zu sehen. Die Gewindetiefe I als Differenz des Außendurchmessers D der Gewindehülse und dem Außendurchmessers d1 des Kerns ist durch die Länge I gegeben. Die Gewindeteilung h gibt den längsachsenparallelen Abstand zwischen den Mitten zweier benachbarter Gewindegangabschnitten, hier beispielweise zwischen den Gewindegangabschnitten 17, 18, an.

Die beiden eingezeichneten Flanken 19, 20 des Gewindeprofils bilden in diesem Ausführungsbeispiel ein gleichschenkliges Dreieck, wobei der Flankenwinkel 30° beträgt. Der am meisten vom Kern 10 beabstandete Bereich 21 des Gewindeprofils ist durch die durchgängig geradlinige Form der Flanken 19, 20 als Spitze ausgebildet.

In Fig. 2 ist eine Draufsicht auf das Ende 13a der erfindungsgemäßen Gewindehülse 100 aus Fig. 1 zu sehen. Man erkennt den sechseckigen Aufnahmebereich 14a aus Fig. 1 für einen speziellen Innensechskantschlüssel (hier nicht dargestellt). Während die Gewindehülse 100 einen Außendurchmesser D aufweist, hat der Kern 10 der Gewindehülse 100 einen Außendurchmesser d1. Das Innengewinde der Gewindehülse 100 weist den Außendurchmesser d2 auf.

In einer bevorzugten Ausführungsform umfassen die erfindungsgemäßen Gewindehülsen einen Außendurchmesser D von 6 mm bis 30 mm mit einer Teilung h zwischen 2 mm und 5 mm und einer Gewindetiefe I zwischen 0,75 mm und 2 mm.

Besonders bevorzugt sind folgende Kombinationen der Merkmale des Gewindeprofils:

| | | |
|---|---|---|
| - bei D = 6 mm: | h = 2 mm | l = 0,75 mm |
| - bei D = 8 mm: | h = 2 mm | l = 1,25 mm |
| - bei D= 10-16mm: | h = 3 mm | l = 1,25 mm |
| - bei D = 18,5 - 22 mm: | h = 4 mm | l = 1,5 mm |
| - bei D= 25 - 30 mm: | h = 5 mm | l = 2 mm |

### Bezugszeichenliste

- 100: Gewindehülse
- 10: Kern
- 11: Gewinde
- 12: Längsachse der Gewindehülse
- 13a, 13b: Enden der Gewindehülse
- 14: Hohlraum
- 14a, 14b, 14c, 14d: Unterbereiche des Hohlraums 14
- 15: Einkerbungen
- 16: Innengewinde
- 17, 18: Gewindegangabschnitte
- 19, 20: Flanken des Gewindeprofils
- 21: vom Kern am meisten beabstandete Bereich des Gewindeprofils
- L: Länge der Gewindehülse
- a: Gewindefreier Bereich am Ende 13b der Gewindehülse
- L1: Länge des Hohlraums 14
- L2: Länge des Unterbereichs 14a
- L3: Länge des Unterbereichs 14b
- l: Gewindetiefe
- h: Gewindeteilung
- D: Außendurchmesser der Gewindehülse
- d1: Außendurchmesser des Kerns
- d2: Außendurchmesser des Innengewindes der Gewindehülse

## Patentansprüche

1. Gewindehülse (100) aus Metall zum Eindrehen in eine Aufnahmeöffnung eines Werkstücks,
- mit einem Kern (10) und einem außen auf dem Kern (10) angebrachten Gewinde (11),
- wobei das Gewindeprofil einen Flankenwinkel von 25° bis 35° aufweist,
**dadurch gekennzeichnet,**
- **dass** die Teilung (h) des Gewindes (11) das 0,1-fache bis 0,4- fache des Außendurchmessers (D) der Gewindehülse (100) beträgt, und
- **dass** die Gewindetiefe (l) des Gewindes (11) das 0,02-fache bis 0,2-fache des Außendurchmessers (D) der Gewindehülse (100) beträgt.

2. Gewindehülse (100) gemäß Anspruch 1,**dadurch gekennzeichnet,dass** das Gewindeprofil keine Krümmung aufweist, insbesondere in dem vom Kern (10) abgewandten Bereich (21) des Gewindeprofils.

3. Gewindehülse (100) gemäß einem der vorhergehenden Ansprüche,**dadurch gekennzeichnet,dass** das Gewindeprofil im Wesentlichen spitz ausgebildet ist.

4. Gewindehülse (100) gemäß einem der vorhergehenden Ansprüche, **dadurch gekennzeichnet,dass** der Flankenwinkel entlang der gesamten Gewindetiefe (l) konstant ist.

5. Gewindehülse (100) gemäß einem der vorhergehenden Ansprüche,
**dadurch gekennzeichnet,**
**dass** die Gewindehülse (100) zum Eindrehen in ein Werkstück aus Holz ausgebildet ist.

6. Gewindehülse (100) gemäß einem der vorhergehenden Ansprüche,
**dadurch gekennzeichnet,**
**dass** der Flankenwinkel des Gewindeprofils 28° bis 32°, bevorzugt 29° bis 31°, besonders bevorzugt 30°, beträgt.

7. Gewindehülse (100) gemäß einem der vorhergehenden Ansprüche,
**dadurch gekennzeichnet,**
**dass** die Teilung (h) des Gewindes (11) das 0,15-fache bis 0,35-fache, bevorzugt das 0,16-fache bis 0,33-fache, des Außendurchmessers (D) der Gewindehülse (100) beträgt.

8. Gewindehülse (100) gemäß einem der vorhergehenden Ansprüche,
**dadurch gekennzeichnet,**
**dass** die Gewindetiefe (l) des Gewindes (11) das 0,04-fache bis 0,18-fache, bevorzugt das 0,06-fache bis 0,16-fache, des Außendurchmessers (D) der Gewindehülse (100) beträgt.

9. Gewindehülse (100) gemäß einem der vorhergehenden Ansprüche,
**dadurch gekennzeichnet,**
**dass** der Kern (10) der Gewindehülse (100) einen konstanten Durchmesser (d1) aufweist.

10. Gewindehülse (100) gemäß einem der vorhergehenden Ansprüche,
**dadurch gekennzeichnet,**
**dass** die Gewindehülse (100) aus Stahl, Messing oder Zinkdruckguss ausgebildet ist.

## Claims

1. A threaded sleeve (100) made of metal for screwing into a receiving opening of a workpiece, comprising:
- a core (10) and a thread (11) provided on the outside of the core (10),
- wherein the thread profile has a flank angle ranging from 25° to 35°; **characterized in**
- **that** the pitch (h) of the thread is 0.1-fold to 0.4-fold of the outer diameter (D) of the threaded sleeve (100), and
- **that** the thread depth (I) of the thread (11) is 0.02-fold to 0.2-fold of the outer diameter (D) of the threaded sleeve (100).

2. The threaded sleeve (100) according to claim 1, **characterized in that** the thread profile has no curvature, in particular **in that** region (21) of the thread profile that faces away from the core (10).

3. The threaded sleeve (100) according to any one of the preceding claims, **characterized in that** the thread profile is formed to be substantially pointed.

4. The threaded sleeve (100) according to any one of the preceding claims, **characterized in that** the flank angle is constant along the entire thread depth (l).

5. The threaded sleeve (100) according to any one of the preceding claims, **characterized in that** the threaded sleeve (100) is formed for screwing into a workpiece made of wood.

6. The threaded sleeve (100) according to any one of the preceding claims, **characterized in that** the flank angle of the thread profile is 28º to 32º, preferably 29º to 31º, particularly preferably 30º.

7. The threaded sleeve (100) according to any one of the preceding claims, **characterized in that** the pitch (h) of the thread (11) is 0.15-fold to 0.35-fold, preferably 0.16-fold to 0.33-fold of the outer diameter (D) of the threaded sleeve (100).

8. The threaded sleeve (100) according to any one of the preceding claims, **characterized in that** the thread depth (I) of the thread (11) is 0.04-fold to 0.18-fold, preferably 0.06-fold to 0.16-fold of the outer diameter (D) of the threaded sleeve (100).

9. The threaded sleeve (100) according to any one of the preceding claims, **characterized in that** the core (10) of the threaded sleeve (100) has a constant diameter (d1).

10. The threaded sleeve (100) according to any one of the preceding claims, **characterized in that** the threaded sleeve (100) is made of steel, brass or die-cast zinc.

## Revendications

1. Douille filetée (100) en métal destinée à être vissée dans une ouverture de réception d'une pièce,
- comprenant un fond (10) et un filet (11) placé extérieurement sur le fond (10),
- sachant que le profilé fileté présente un angle de flanc de 25° à 35°, **caractérisé en ce que**
- la séparation (h) du filet (11) fait 0,1 à 0,4 fois le diamètre extérieur (D) de la douille filetée (100), et
- que la profondeur de filet (l) du filet (11) fait 0,02 fois à 0,2 fois le diamètre extérieur (D) de la douille filetée (100).

2. Douille filetée (100) selon la revendication 1, **caractérisée en ce que** le profilé fileté ne présente pas de coude, en particulier dans la partie (21) du profilé fileté éloignée du fond (10).

3. Douille filetée (100) selon la revendication 1 ou 2, **caractérisée en ce que** le profilé fileté est conçu essentiellement pointu.

4. Douille filetée (100) selon l'une des revendications précédentes, **caractérisé en ce que** l'angle du filet est constant sur toute la profondeur de filet (l).

5. Douille filetée (100) selon l'une des revendications précédentes, **caractérisé en ce que** la douille filetée (100) est conçue pour être vissée dans une pièce de bois.

6. Douille filetée (100) selon l'une des revendications précédentes, **caractérisé en ce que** l'angle du filet du profilé fileté est de 28° à 32°, de préférence de 29° à 31°, de préférence en particulier de 30°.

7. Douille filetée (100) selon l'une des revendications précédentes, **caractérisé en ce que** la séparation (h) du filet (11) fait 0,15 à 0,35 fois, de préférence 0,16 à 0,33 fois le diamètre extérieur (D) de la douille filetée (100).

8. Douille filetée (100) selon l'une des revendications précédentes, **caractérisé en ce que** la profondeur (l) du filet (11) fait 0,04 fois à 0,18 fois, de préférence 0,06 fois à 0,16 fois le diamètre extérieur (D) de la douille filetée (100).

9. Douille filetée (100) selon l'une des revendications précédentes, **caractérisé en ce que** le fond (10) de la douille filetée (100) présente un diamètre constant (d1).

10. Douille filetée (100) selon l'une des revendications précédentes, **caractérisé en ce que** la douille filetée (100) est fabriquée en acier, laiton ou zinc moulé sous pression.
